# EUROPÄISCHE PATENTSCHRIFT

(11) **EP 1 655 324 B1**
(45) Veröffentlichungstag und Bekanntmachung des Hinweises auf die Patenterteilung: **05.03.2008**
(21) Anmeldenummer: 05022995.4
(22) Anmeldetag: 21.10.2005
(51) Int. Cl.: C08G 64/14

(54) **Verzweigte Polycarbonate**
Branched polycarbonate
Polycarbonate ramifié

(30) Priorität: 03.11.2004 DE 102004053047
(43) Veröffentlichungstag der Anmeldung: 10.05.2006
(73) Patentinhaber: Bayer MaterialScience AG, 51368 Leverkusen (DE)
(72) Erfinder: Heuer, Helmut-Werner, Dr., 47829 Krefeld (DE); Wehrmann, Rolf, Dr., 47800 Krefeld (DE); Blaschke, Ulrich, Dr., 47803 Krefeld (DE); Erkelenz, Michael, 47239 Duisburg (DE)

(56) Entgegenhaltungen:
- PATENT ABSTRACTS OF JAPAN Bd. 018, Nr. 209 (C-1190), 13. April 1994 (1994-04-13) & JP 06 009768 A (TEIJIN CHEM LTD), 18. Januar 1994 (1994-01-18)
- DOBKOWSKI Z.: "Dependence of polymer specific volume on molecular characteristics" EUROPEAN POLYMER JOURNAL, Bd. 20, Nr. 4, 1984, Seiten 399-403, XP002361625

## Beschreibung

Gegenstand der vorliegenden Erfindung sind verzweigte Polycarbonate enthaltend bestimmte Verzweiger, ein Verfahren zu deren Herstellung sowie die Verwendung bestimmter Verbindungen als Verzweiger zur Herstellung von Polycarbonat.

Aromatische Polycarbonate gehören zur Gruppe der technischen Thermoplaste. Sie zeichnen sich durch die Kombination der technologisch wichtigen Eigenschaften Transparenz, Wärmeformbeständigkeit und Zähigkeit aus.

Zur Gewinnung hochmolekularer linearer Polycarbonate nach dem Phasengrenzflächenverfahren werden im Zweiphasengemisch die Alkalisalze von Bisphenolen mit Phosgen umgesetzt. Das Molekulargewicht kann durch die Menge an Monophenolen wie z.B. Phenol oder tert.-Butylphenol gesteuert werden. Bei diesen Umsetzungen entstehen praktisch ausschließlich lineare Polymere. Dies kann durch Endgruppenanalyse nachgewiesen werden.

Zur Herstellung von linearen Polycarbonaten nach dem Phasengrenzflächenverfahren sei beispielhaft auf H. Schnell, Chemistry and Physics of Polycarbonates, Polymer Reviews, Vol. 9, Interscience Publishers, New York 1964 S. 33 ff. und auf Polymer Reviews, Vol. 10, "Condensation Polymers by Interfacial and Solution Methods", Paul W. Morgan, Interscience Publishers, New York 1965, Kap. VIII, S. 325 verwiesen.

In US B 4 185 009, DE A 25 00 092 und JP B 79039040 ist ein Verfahren beschrieben, in dem, ausgehend von Gemischen spezieller Bisphenole mit Kettenabbrecher und Isatinbisphenolen als Verzweiger, nach Umsetzung mit Phosgen in einer Phasengrenzflächenreaktion verzweigte, hochmolekulare Polycarbonate erhalten werden können. In DE A 42 40 313 werden Copolycarbonate mit verbesserter Fließfähigkeit auf Basis von Bisphenol A und Bisphenol TMC mit Isatinbiskresol als Verzweiger beschrieben.

In DE A 19 913 533 werden hochverzweigte Polycarbonate beschrieben, bei deren Herstellung oligomere oder polymere Verzweiger zum Einsatz kommen. In DE A 19 943 642 sind verzweigte Polycarbonate angegeben, die aufgrund ihrer Strukturviskosität für den Einsatz als Wasserflaschenmaterial geeignet sind.

So beschreibt US B 5 367 044 Flaschen aus verzweigtem Polycarbonat, bei dem 1,1,1-Tris-(4-hydroxyphenyl)ethan (THPE) als Verzweiger in Mengen von 0,28-0,36 mol-% eingesetzt wird.

Verzweigte Polycarbonate sind wegen ihrer im Vergleich zu linearen Polycarbonaten besseren Fließfähigkeit besonders für Anwendungen von Interesse, bei denen gutes Fließen der Polymerschmelze bei höheren Scherraten erwünscht ist, d. h. zum Beispiel beim Spritzgießen komplexer Strukturen. Verzweigte Polycarbonate zeichnen sich durch Strukturviskosität aus und können nicht mehr als newtonsche Fluide angesehen werden.

Im Stand der Technik werden hochreine trifunktionelle Produkte als Verzweiger eingesetzt. Vorteilhaft wäre die Verwendung von trifunktionellen Verbindungen, welche sich einfach herstellen lassen und als Nebenkomponenten lediglich Bisphenole enthalten, welche nicht umständlich abgetrennt werden müssen.

Es bestand daher die Aufgabe, langkettig-verzweigte Polycarbonate und Verfahren zu deren Herstellung verfügbar zu machen, welche diese Nachteile vermeiden. Diese Aufgabe wird überraschenderweise durch den Einsatz von mindestens einem Verzweiger der allgemeinen Formel (1) gelöst: 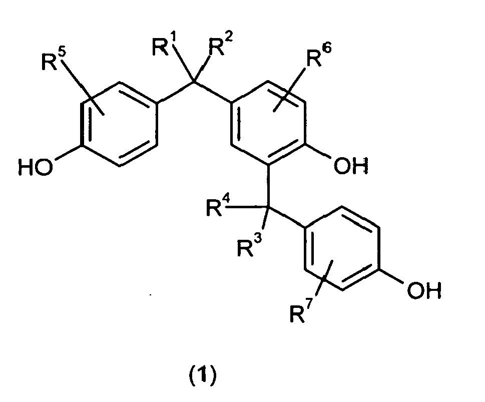 in welcher
R¹, R², R³ und R⁴ unabhängig voneinander für C₁-C₁₀ Alkyl, bevorzugt C₁-C₈-Alkyl, besonders bevorzugt C₁-C₆-Alkyl stehen, ganz besonders bevorzugt für Methyl steht,
R⁵, R⁶ und R⁷ unabhängig voneinander für Wasserstoff oder C₁-C₁₀ Alkyl, bevorzugt C₁-C₈-Alkyl, besonders bevorzugt für Wasserstoff oder C₁-C₆-Alkyl stehen, ganz besonders bevorzugt für Wasserstoff stehen, oder
R¹ und R² sowie R³ und R⁴ unabhängig mit dem Kohlenstoffatom, an das sie gebunden sind, C₅-C₁₀ Cycloalkyl, bevorzugt C₅-C₈ Cycloalkyl, insbesondere Cyclopentyl oder Cyclohexyl bilden können, wobei der Cycloalkyl-Ring bevorzugt durch C₁-C₄-Alkyl, insbesondere Methyl, substituiert sein kann.

Die oben genannten Alkyl-Reste können sowohl linear als auch verzweigt sein. Besonders bevorzugt werden Verbindungen der allgemeinen Formel (2), die sich von Bisphenol A-Derivaten ableiten und in welcher R⁵, R⁶ und R⁷ die oben genannte Bedeutung haben.

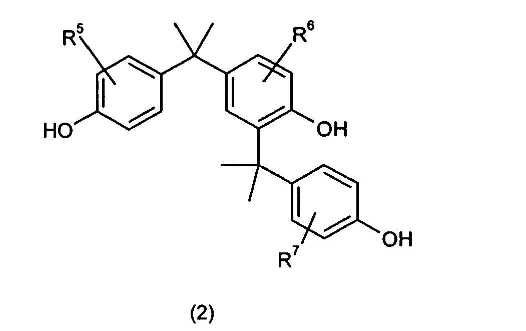

Ganz besonders bevorzugt ist ein Verzweiger der Formel (3):

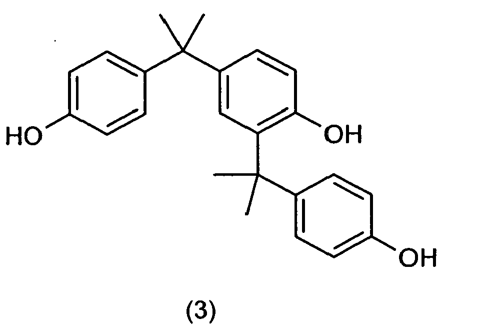

Die Verbindungen der Formeln (1), (2) und (3) sind bekannt oder lassen sich nach bekannten Verfahren herstellen.

Die Verbindung der Formel (3) ist beispielsweise beschrieben in E. Nowakowska, K. Zdzislaw, Polish Journal of Applied Chemistry, 40(3), 247 (1997), in J. Paryzkova, D. Snobl, P. Matousek, Vyzk. Ustav Org. Synt., Chemicky Prumysl 29(1), 30, (1979) oder in US 3,281,478 der Fa. Union Carbide Corp., New York (25.10.1966)

Diese erfindungsgemäßen Verzweiger lassen sich aus Bisphenol A- oder Bisphenolderivaten und Natriumbisphenolaten, im einfachsten Fall z.B. mit Bisphenol A (BPA) und Natriumbisphenolat A (Na₂BPA) in der Schmelze bei Temperaturen von 120 bis 230°C, bevorzugt 130 bis 220°C, besonders bevorzugt 150 bis 210°C, ganz besonders bevorzugt 160 bis 200°C, unter Entfernen des abgespaltenen Phenols herstellen (siehe Beispiel sowie z.B. US-A 3 281 478).

Überraschender Weise wurde auch gefunden, dass das bei der Herstellung des Verzweigers anfallende Rohprodukt ohne weitere aufwändige Reinigung eingesetzt werden kann, da die einzig nennenswerte Verunreinigung im Rohprodukt lediglich aus Bisphenol besteht. Bei der Synthese der verzweigten Polycarbonate kann dieser Gehalt an Bisphenol mit einkalkuliert werden. Er variiert bei unterschiedlichen Chargen und kann beispielsweise durch Gaschromatographie vor der Verwendung einfach bestimmt werden.

Ein wesentlicher Vorteil besteht somit auch darin, dass der Verzweiger unmittelbar, d.h. so wie er technisch anfällt, z.B. aus der Destillation von BPA-Strömen bei der BPA-Herstellung, aus der Umkristallisation oder der Schmelzekristallisation, für die Synthese von Polycarbonaten eingesetzt werden kann.

Weiterhin weisen die verzweigten Polycarbonate die für bestimmte Anwendungen geforderte Thermostabilität auf.

Gegenstand der vorliegenden Erfindung sind Polycarbonate enthaltend die von Verbindungen der Formel (1) über die OH-Gruppe abgeleitete Verzweigerstrukturen der Formel (1a) 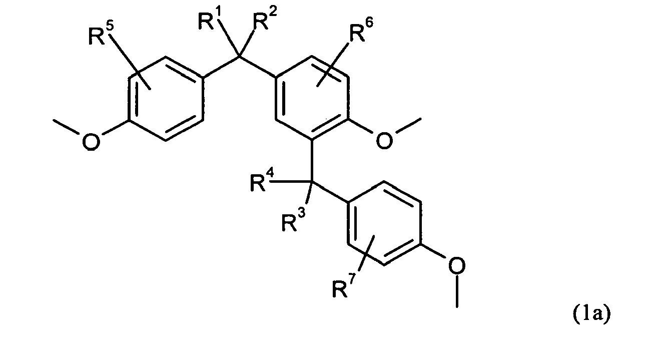 worin die Reste R¹ bis R⁷ die oben genannten Bedeutungen besitzen.

Bevorzugt sind Polycarbonate enthaltend die Verzweigerstrukturen der Formel (2a) 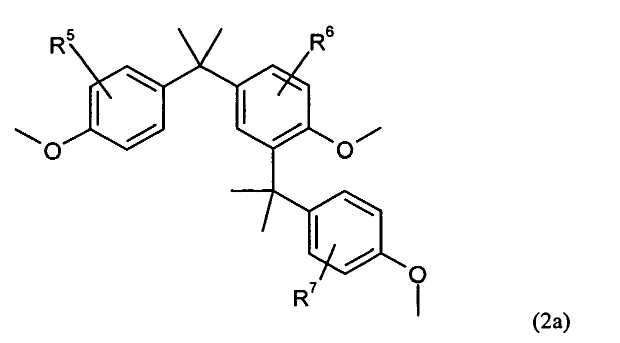 worin R⁵, R⁶ und R⁷ die oben genannten Bedeutungen haben.

Besonders bevorzugt sind Polycarbonate enthaltend die Verzweigerstruktur der Formel (3a) 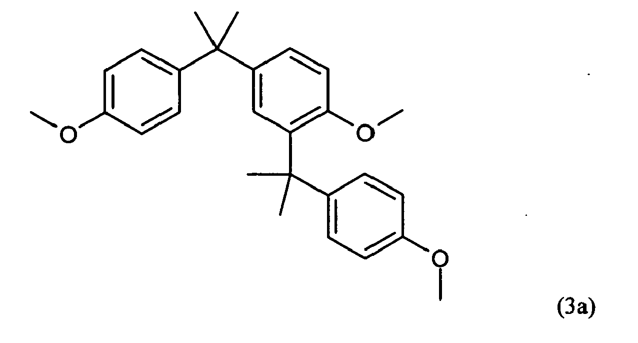 Die Herstellung der erfindungsgemäßen Polycarbonate erfolgt z.B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden und/oder mit Diphenylcarbonat unter Verwendung von mindestens einem der erfindungsgemäßen Verzweiger der Formel (1) bzw. der bevorzugten Formeln (2) und/oder (3).

Die erfindungsgemäßen Polycarbonate enthalten mindestens einen Diphenolrest der Formel (4)

-O-D-O-

worin
- D: unabhängig voneinander für einen aromatischen Rest mit 6 bis 40, vorzugsweise 6 bis 35, insbesondere 6 bis 30 C-Atomen steht, der einen oder mehrere aromatische oder kondensierte, gegebenenfalls Heteroatome enthaltende aromatische Kerne enthalten kann und gegebenenfalls mit C₁-C₁₂-Alkyl, bevorzugt C₁-C₁₀-Alkyl, besonders bevorzugt C₁-C₈-Alkyl und/oder Halogen, bevorzugt Fluor und Chlor, substituiert ist, und wobei der aromatische Rest weiterhin aliphatische Reste, cycloaliphatische Reste, aromatische Kerne oder Heteroatome als Brückenglieder enthalten kann.

Bevorzugt steht D in Formel (4) für einen Rest der Formel (5) 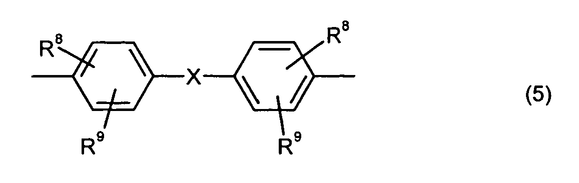 in der
- R⁸ und R⁹: unabhängig voneinander für H, C₁-C₁₈-Alkyl-, C₁-C₁₈-Alkoxy, Halogen wie Cl oder Br oder für jeweils gegebenenfalls substituiertes Aryl- oder Aralkyl, bevorzugt für H oder C₁-C₁₂-Alkyl, besonders bevorzugt für H oder C₁-C₈-Alkyl und ganz besonders bevorzugt für H oder Methyl stehen, und
- X: für eine Einfachbindung, -SO₂- -CO-, -O-, -S-, C₁- bis C₆-Alkylen, C₂- bis C₅-Alkyliden oder C₅- bis C₆- Cycloalkyliden, welches mit C₁- bis C₆-Alkyl, vorzugsweise Methyl oder Ethyl substituiert sein kann, ferner für C₆- bis C₁₂-Arylen, welches gegebenenfalls mit weiteren Heteroatome enthaltenden aromatischen Ringen kondensiert sein kann, steht.

Bevorzugt steht X für eine Einfachbindung, C₁ bis C₅-Alkylen, C₂ bis C₅-Alkyliden, C₅ bis C₆-Cycloalkyliden, -O-, -SO-, -CO-, -S-, -SO₂-,
oder ein für einen Rest der Formel (5a) oder (5b) 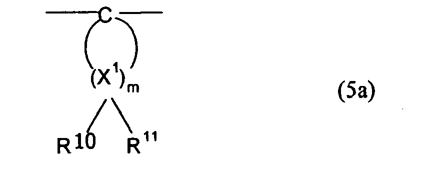 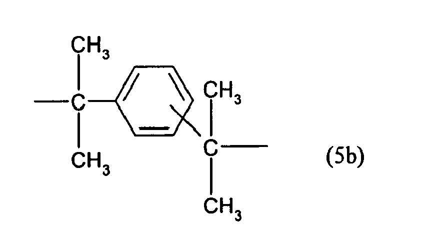 wobei
- R¹⁰ und R¹¹: für jedes X¹ individuell wählbar, unabhängig voneinander Wasserstoff oder C₁ bis C₆₋Alkyl, vorzugsweise Wasserstoff, Methyl oder Ethyl bedeuten und
- X¹: Kohlenstoff und
- m: eine ganze Zahl von 4 bis 7, bevorzugt 4 oder 5 bedeuten, mit der Maßgabe, dass an mindestens einem Atom X¹, R¹⁰ und R¹¹ gleichzeitig Alkyl sind.

Beispielhaft genannte Diphenole sind Hydrochinon, Resorcin, Dihydroxybiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, sowie deren kernalkylierte und kernhalogenierte Verbindungen, und auch α,ω- Bis-(hydroxyphenyl)-polysiloxane.

Bevorzugte Diphenole sind 4,4'-Dihydroxybiphenyl (DOD), 4,4'-Dihydroxybiphenylether (DOD-Ether), 2,2-Bis-(4-hydroxyphenyl)-propan (Bisphenol A), 1,1-Bis-(4-hydroxyphenyl)-3,3,5-trimethylcyclohexan (Bisphenol TMC), 1,1-Bis-(4-hydroxyphenyl)-cyclohexan, 2,4-Bis-(4-hydroxyphenyl)-2-methylbutan, 1,1-Bis-(4-hydroxyphenyl)-1-phenylethan, 1,4-Bis-[2-(4-hydroxyphenyl)-2-propyl]benzol, 1,3-Bis[2-(4-hydroxyphenyl)-2-propyl]-benzol (Bisphenol M), 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 2,2-Bis-(3,5-dichlor-4-hydroxyphenyl)-propan und 2,2-Bis-(3,5-dibrom-4-hydroxyphenyl)-propan.

Besonders bevorzugte Diphenole sind 2,2-Bis-(4-hydroxyphenyl)-propan (Bisphenol A), 4,4'-Dihydroxybiphenyl (DOD), 4,4'-Dihydroxybiphenylether (DOD-Ether), 1,3-Bis[2-(4-hydroxyphenyl)-2-propyl]-benzol (Bisphenol M), 2,2-Bis-(3,5-dimethyl-4-hydroxyphenyl)-propan, 1,1-Bis-(4-hydroxyphenyl)-1-phenylethan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC).

Ganz besonders bevorzugt sind 2,2-Bis-(4-hydroxyphenyl)-propan (Bisphenol A), 4,4'-Dihydroxybiphenyl (DOD), 4,4'-Dihydroxybiphenylether (DOD-Ether), 1,3-Bis[2-(4-hydroxyphenyl)-2-propyl]-benzol (Bisphenol M) und 1,1-Bis-(4-hydroxyphenyl)-3,3,5-trimethylcyclohexan (Bisphenol TMC).

Die Diphenole können sowohl allein als auch im Gemisch miteinander verwendet werden: Unter Polycarbonaten im Sinne der vorliegenden Erfindung sind daher sowohl Homo- als auch Copolycarbonate zu verstehen. Copolycarbonate enthalten im allgemeinen mindestens bis zu 50 mol-%, vorzugsweise bis zu 45 mol-%, besonders bevorzugt bis zu 40 mol-%, insbesondere bis zu 30 mol-% (bezogen auf die Summe der Mole eingesetzter Diphenole) mindestens ein weiteres Diphenol, ausgewählt aus der Formel 4 bzw. 5. Die Diphenole sind literaturbekannt oder nach literaturbekannten Verfahren herstellbar (siehe z.B. H. J. Buysch et al., Ullmann's Encyclopedia of Industrial Chemistry, VCH, New York 1991, 5. Ed., Vol. 19, p. 348).

Die Verzweiger der Formeln (1) bis (3) werden vorzugsweise in Mengen zwischen 0.05 und 10 mol%, besonders bevorzugt 0,1-5 mol-%, ganz besonders bevorzugt 0,2-1 mol-%, bezogen auf die Mole eingesetzter Diphenole, eingesetzt.

Die erfindungsgemäßen Polycarbonate haben im allgemeinen mittlere Molekulargewichte (Gewichtsmittel) von 13.000 bis 100.000, vorzugsweise 15.000 bis 80.000, besonders bevorzugt 15.000 bis 60.000 g/mol, bestimmt durch Gelpermeationschromatographie (GPC) kalibriert gegen Polycarbonat mit Bisphenol A als Diphenolbaustein.

Die vorliegende Erfindung betrifft weiterhin ein Verfahren zur Herstellung verzweigter Polycarbonate und Copolycarbonate, dadurch gekennzeichnet, dass Diphenole und Verzweiger der Formel (1) bzw. (2) bzw. (3) in wässriger alkalischer Lösung gelöst werden und mit einer gegebenenfalls in einem Lösemittel gelösten Carbonatquelle wie Phosgen in einem Zweiphasengemisch aus einer wässrigen alkalischen Lösung, einem organischen Lösemittel und einem Katalysator, bevorzugt einer Aminverbindung, zur Reaktion gebracht werden. Die Reaktionsführung kann auch mehrstufig erfolgen.

Die Konzentration der Diphenole einschließlich der Verzweiger in der wässrigen alkalischen Lösung beträgt 2 bis 25 Gew.-%, bevorzugt 2 bis 20 Gew.-% besonders bevorzugt 2 bis 18 Gew.-% und ganz besonders bevorzugt 3 bis 15 Gew.-%. Die wässrige alkalische Lösung besteht aus Wasser, in dem Hydroxide von Alkali- oder Erdalkalimetallen gelöst sind. Bevorzugt sind Natrium- und Kaliumhydroxide.

Bei der Verwendung von Phosgen als Carbonatquelle beträgt das Volumenverhältnis wässrige alkalische Lösung zu organischem Lösemittel 5:95 bis 95:5 bevorzugt 20:80 bis 80:20, besonders bevorzugt 30:70 bis 70:30 und ganz besonders bevorzugt 40:60 bis 60:40. Das Molverhältnis Bisphenol zu Phosgen ist kleiner als 1:10, bevorzugt kleiner als 1:6 besonders bevorzugt kleiner als 1:4 und ganz besonders bevorzugt kleiner als 1:3. Die Konzentration der erfindungsgemäßen verzweigten Polycarbonate und Copolycarbonate in der organischen Phase beträgt 1,0 bis 25 Gew.- % bevorzugt 2 bis 20 Gew.-%, besonders bevorzugt 2 bis 18 Gew.-% und ganz besonders bevorzugt 3 bis 15 Gew.-%.

Die Konzentration der Aminverbindung beträgt bezogen auf die eingesetzte Bisphenolmenge 0,1 bis 10 mol-%, bevorzugt 0,2 bis 8 mol-%, besonders bevorzugt 0,3 bis 6 mol-% und ganz besonders bevorzugt 0,4 bis 5 mol-%.

Bei der Carbonatquelle handelt es sich um Phosgen, Diphosgen oder Triphosgen, bevorzugt um Phosgen. Für den Fall, dass Phosgen eingesetzt wird, kann ggf. auf ein Lösemittel verzichtet und das Phosgen direkt in das Reaktionsgemisch eingeleitet werden.

Als Katalysator können tertiäre Amine wie Triethylamin oder N-Alkylpiperidine eingesetzt werden. Als Katalysatoren geeignet sind Trialkylamine und 4-(Dimethylamino)pyridin. Besonders geeignet sind Triethylamin, Tripropylamin, Triisopropylamin, Tributylamin, Triisobutylamin, N-Methylpiperidin, N-Ethylpiperidin und N-Propylpiperidin.

Als organisches Lösemittel kommen halogenierte Kohlenwasserstoffe wie Methylenchlorid und/oder Chlorbenzol, Dichlorbenzol, Trichlorbenzol oder Gemische davon oder aromatische Kohlenwasserstoffe, wie z.B. Toluol oder Xylole in Frage.

Die Reaktionstemperatur kann -5°C bis 100°C betragen, bevorzugt 0°C bis 80°C besonders bevorzugt 10°C bis 70°C und ganz besonders bevorzugt 10°C bis 60°C betragen.

Alternativ können die erfindungsgemäßen Polycarbonate auch nach dem Schmelz umesterungsverfahren hergestellt werden. Das Schmelzumesterungsverfahren ist beispielsweise in der Encyclopedia of Polymer Science, Vol. 10 (1969), Chemistry and Physics of Polycarbonates, Polymer Reviews, H. Schnell, Vol. 9, John Wiley and Sons, Inc. (1964) sowie der DE-C 10 31 512 beschrieben.

Beim Schmelzumesterungsverfahren werden die bereits beim Phasengrenzflächenverfahren beschriebenen aromatischen Diphenole und Verzweiger, mit Kohlensäurediestern unter Zuhilfenahme von geeigneten Katalysatoren und gegebenenfalls weiteren Zusatzstoffen in der Schmelze umgeestert

Kohlensäurediester im Sinne der Erfindung sind bevorzugt solche der Formel (6) und (7) 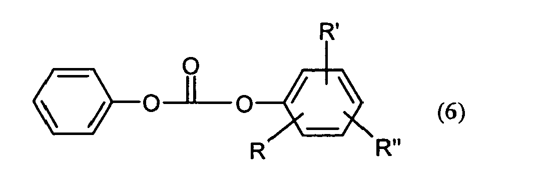 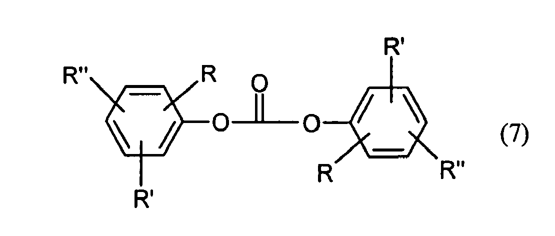 wobei
- R, R' und R": unabhängig voneinander H, C₁-C₃₄-Alkyl, C₅-C₃₄-Cycloalkyl, C₇-C₃₄-Alkaryl oder C₆₋C₃₄-Aryl darstellen.

Beispielhaft genannt seien:
Diphenylcarbonat, Butylphenyl-phenylcarbonat, Di-Butylphenylcarbonat, Isobutylphenyl-phenylcarbonat, Di-Isobutylphenylcarbonat, tert-Butylphenyl-phenylcarbonat, Di-tert-Butylphenylcarbonat, n-Pentylphenyl-phenylcarbonat, Di-(n-Pentylphenyl)carbonat, n-Hexylphenyl-phenylcarbonat, Di-(n-Hexylphenyl)carbonat, Cyclohexylphenyl-phenylcarbonat, Di-Cyclohexylphenylcarbonat, Phenylphenol-phenylcarbonat, Di-Phenylphenolcarbonat, Isooctylphenyl-phenylcarbonat, Di-Isooctylphenylcarbonat, n-Nonylphenyl-phenylcarbonat, Di-(n-Nonylphenyl)-carbonat, Cumylphenyl-phenylcarbonat, Di-Cumylphenylcarbonat, Naphthylphenyl-phenylcarbonat, Di-Naphthylphenylcarbonat, Di-tert-Butylphenyl-phenylcarbonat, Di-(Di-tert-Butylphenyl)carbonat, Dicumylphenyl-phenylcarbonat, Di-(Dicumylphenyl)carbonat, -Phenoxyphenylphenylcarbonat, Di-(4-Phenoxyphenyl)carbonat, 3-Pentadecylphenyl-phenylcarbonat, Di-(3-Pentadecylphenyl)carbonat Tritylphenyl-phenylcarbonat, Di-Tritylphenylcarbonat.

Bevorzugt sind Diphenylcarbonat, tert-Butylphenyl-phenylcarbonat, Di-tert-Butylphenylcarbonat, Phenylphenol-phenylcarbonat, Di-Phenylphenolcarbonat, Cumylphenyl-phenylcarbonat, Di-Cumylphenylcarbonat. Besonders bevorzugt ist Diphenylcarbonat.

Es können auch Mischungen der genannten Kohlensäurediester eingesetzt werden.

Der Anteil an Kohlensäurediester beträgt 100 bis 130 mol-%, bevorzugt 103 bis 120 mol-%, besonders bevorzugt 103 bis 109 mol-%, bezogen auf die Diphenole.

Als Katalysatoren im Sinne der Erfindung werden im Schmelzumesterungsverfahren wie in der genannten Literatur beschrieben basische Katalysatoren wie beispielsweise Alkali- und Erdalkalihydroxide und -oxide aber auch Ammonium- oder Phosphoniumsalze, im Folgenden als Oniumsalze bezeichnet, eingesetzt. Bevorzugt werden dabei Oniumsalze, besonders bevorzugt Phosphoniumsalze eingesetzt.

Phosphoniumsalze im Sinne der Erfindung sind solche der Formel (8) 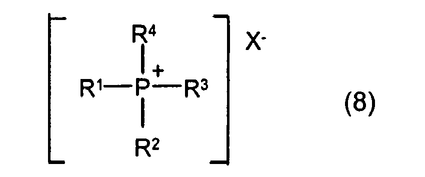 wobei
- R¹⁻⁴: dieselben oder verschiedene C₁-C₁₀-Alkyle, C₆-C₁₀-Aryle, C₇-C₁₀-Aralkyle oder C₅-C₆₋Cycloalkyle sein können, bevorzugt Methyl oder C₆-C₁₄-Aryle, besonders bevorzugt Methyl oder Phenyl, und

- X⁻: ein Anion wie Hydroxid, Sulfat, Hydrogensulfat, Hydrogencarbonat, Carbonat, ein Halogenid, bevorzugt Chlorid, oder ein Alkoholat der Formel OR sein kann, wobei R C₆₋C₁₄-Aryl oder C₇-C₁₂-Aralkyl, bevorzugt Phenyl, sein kann. Bevorzugte Katalysatoren sind Tetraphenylphosphoniumchlorid, Tetraphenylphosphoniumhydroxid, Tetraphenylphosphoniumphenolat, besonders bevorzugt Tetraphenylphosphoniumphenolat.

Die Katalysatoren werden bevorzugt in Mengen von 10⁻⁸ bis 10⁻³ mol, bezogen auf ein mol Diphenol, besonders bevorzugt in Mengen von 10⁻⁷ bis 10⁻⁴ mol, eingesetzt.

Weitere Katalysatoren können allein oder gegebenenfalls zusätzlich zu dem Oniumsalz verwendet werden, um die Geschwindigkeit der Polymerisation zu erhöhen. Dazu gehören Salze von Alkalimetallen und Erdalkalimetallen, wie Hydroxide, Alkoxide und Aryloxide von Lithium, Natrium und Kalium, vorzugsweise Hydroxid-, Alkoxid- oder Aryloxidsalze von Natrium. Am meisten bevorzugt sind Natriumhydroxid- und Natriumphenolat. Die Mengen des Cokatalysators können im Bereich von 1 bis 200 ppb, vorzugsweise 5 bis 150 ppb und am meisten bevorzugt 10 bis 125 ppb liegen, jeweils berechnet als Natrium.

Die Umesterungsreaktion des aromatischen Diphenols und des Kohlensäurediester in der Schmelze wird bevorzugt in zwei Stufen durchgeführt. In der ersten Stufe findet das Aufschmelzen der aromatischen Diphenols und des Kohlensäurediester bei Temperaturen von 80 bis 250°C, bevorzugt 100 bis 230°C, besonders bevorzugt 120 bis 190°C unter normalem Druck in 0 bis 5 Stunden, bevorzugt 0,25 bis 3 Stunden statt. Nach Zugabe des Katalysators wird durch Anlegen von Vakuum (bis zu 2 mm Hg) und Erhöhung der Temperatur (auf bis zu 260°C) durch Abdestillieren des Monophenols das Oligocarbonat aus dem aromatischen Diphenol und dem Kohlensäurediester hergestellt. Hierbei fällt die Hauptmenge an Brüden aus dem Prozess an. Das so hergestellte Oligocarbonat hat eine mittlere Gewichtsmolmasse M_{w} (ermittelt durch Messung der rel. Lösungsviskosität in Dichlormethan oder in Mischungen gleicher Gewichtsmengen Phenol/o-Dichlorbenzol geeicht durch Lichtstreuung) im Bereich von 2000 g/mol bis 18 000 g/mol bevorzugt von 4 000 g/mol bis 15 000 g/mol.

In der zweiten Stufe wird bei der Polykondensation durch weiteres Erhöhen der Temperatur auf 250 - 320°C, bevorzugt 270 - 295°C und einem Druck von <2 mm Hg das Polycarbonat hergestellt. Hierbei wird der Rest an Brüden aus dem Prozess entfernt.

Die Katalysatoren können auch in Kombination (zwei oder mehrere) miteinander eingesetzt werden.

Beim Einsatz von Alkali-/Erdalkalimetallkatalysatoren kann es vorteilhaft sein, die Alkali-/ Erdalkalimetallkatalysatoren zu einem späteren Zeitpunkt (z.B. nach der Oligocarbonatsynthese bei der Polykondensation in der zweiten Stufe) zuzusetzen.

Die Reaktion des aromatischen Diphenols und des Kohlensäurediester zum Polycarbonat kann im Sinne des erfindungsgemäßen Verfahrens diskontinuierlich oder bevorzugt kontinuierlich durchgeführt werden, beispielsweise in Rührkesseln, Dünnschichtverdampfern, Fallfilmverdampfern, Rührkesselkaskaden, Extrudern, Knetern, einfachen Scheibenreaktoren und Hochviskosscheibenreaktoren.

Die in der vorliegenden Beschreibung aufgeführten allgemeinen oder in Vorzugsbereichen aufgeführten Definitionen, Parameter, Verbindungen und Erläuterungen können jedoch auch untereinander, also zwischen den jeweiligen Bereichen und Vorzugsbereichen beliebig kombiniert werden.

Die erfindungsgemäßen verzweigten Polycarbonate und Copolycarbonate können in bekannter Weise aufgearbeitet und zu beliebigen Formkörpern verarbeitet werden, beispielsweise durch Extrusion, Spritzguss oder Extrusionsblasformen.

Den erfindungsgemäßen verzweigten Polycarbonaten und Copolycarbonaten können noch andere aromatische Polycarbonate und/oder andere aromatische Polyestercarbonate und/oder andere aromatische Polyester in bekannter Weise zugemischt werden, beispielsweise durch Compoundierung.

Den erfindungsgemäßen verzweigten Polycarbonaten und Copolycarbonaten können noch die für diese Thermoplasten üblichen Additive wie Füllstoffe, UV-Stabilisatoren, Thermostabilisatoren, Antistatika und Pigmente in den üblichen Mengen zugesetzt werden; gegebenenfalls können das Entformungsverhalten, das Fließverhalten, und/oder die Flammwidrigkeit durch Zusatz externer Entformungsmittel, Fließmittel, und/oder Flammschutzmittel verbessert werden (z.B. Alkyl- und Arylphosphite, -phosphate, -phosphane, -niedermolekulare Carbonsäureester, Halogenverbindungen, Salze, Kreide, Quarzmehl, Glas- und Kohlenstofffasern, Pigmente und deren Kombination. Solche Verbindungen werden z.B. in WO 99/55772, S. 15 - 25, und in den entsprechenden Kapiteln des "Plastics Additives Handbook" , ed. Hans Zweifel, 5^{th} Edition 2000, Hanser Publishers, Munich, beschrieben).

Die erfindungsgemäßen verzweigten Polycarbonate und Copolycarbonate, gegebenenfalls in Abmischung mit anderen Thermoplasten und/oder üblichen Additiven, können zu beliebigen Formkörpern/Extrudaten verarbeitet überall dort eingesetzt werden, wo bereits bekannte Polycarbonate, Polyestercarbonate und Polyester eingesetzt werden. Aufgrund ihres Eigenschaftsprofils eignen sie sich insbesondere als Materialien für den Spritzguss von größeren Formteilen, beispielsweise Autoscheiben und Plattenware. Sie eignen sich aber auch als Substratmaterialien für optische Datenspeicher wie z.B. CD, CD-R, DVD, oder DVD-R, sind aber auch beispielsweise als Folien im Elektrosektor als Formteile im Fahrzeugbau und als Platten für Abdeckungen im Sicherheitsbereich einsetzbar. Die erfindungsgemäßen Polycarbonate können für die Herstellung von Sicherheitsscheiben, die bekanntlich in vielen Bereichen von Gebäuden, Fahrzeugen und Flugzeugen erforderlich sind, sowie als Schilde von Helmen; Folien, insbesondere Skifolien; Blaskörpern (siehe beispielsweise US-Patent 2 964 794), beispielsweise 1 bis 5 Gallon Wasserflaschen; lichtdurchlässigen Platten, insbesondere Hohlkammerplatten, beispielsweise zum Abdecken von Gebäuden wie Bahnhöfen, Gewächshäusern und Beleuchtungsanlagen; optischen Datenspeichern; Ampelgehäusen oder Verkehrsschildern; Schaumstoffen (siehe beispielsweise DE-B 1 031 507); Fäden und Drähten (siehe beispielsweise DE-B 1 137 167 und DE-A 1 785 137) verwendet werden.

Weiterhin können Polycarbonate als transluzente Kunststoffe mit einem Gehalt an Glasfasern für lichttechnische Zwecke (siehe beispielsweise DE-A 1 554 020) oder mit einem Gehalt an Bariumsulfat, Titandioxid und oder Zirkoniumoxid bzw. organischen polymeren Acrylatkautschuken (EP-A 634 445, EP-A 269324) zur Herstellung von lichtdurchlässigen und lichtstreuenden Formteilen, als Trägermaterial für organische Fotoleiter, zur Herstellung von Präzisionsspritzgussteilchen, wie beispielsweise Linsenhalterungen eingesetzt werden. Im letzteren Fall verwendet man Polycarbonate mit einem Gehalt an Glasfasern, die gegebenenfalls zusätzlich etwa 1 bis 10 Gew.-% MoS₂, bezogen auf Gesamtgewicht, enthalten. Weiterhin können die erfindungsgemäße Polycarbonate zur Herstellung optischer Geräteteile, insbesondere Linsen für Foto- und Filmkameras (siehe beispielsweise DE-A 2 701 173); Lichtübertragungsträger, insbesondere als Lichtleiterkabel (siehe beispielsweise EP-A 0 089 801); Elektroisolierstoffe für elektrische Leiter und für Steckergehäuse sowie Steckverbinder; Mobiltelefongehäusen mit verbesserter Beständigkeit gegenüber Parfüm, Rasierwasser und Hautschweiß; Network interface devices; Leuchten, z.B. Scheinwerferlampen, als sogenannte "head-lamps", Streulichtscheiben oder innere Linsen, sowie Langfeldleuchten; medizinischer Geräte, z.B. Oxygenatoren, Dialysatoren; Lebensmittelanwendungen, wie z. B. Flaschen, Geschirr und Schokoladenformen; Anwendungen im Automobilbereich, wo Kontakt zu Kraftstoffen und Schmiermitteln auftreten kann, wie beispielsweise Stoßfänger gegebenenfalls in Form geeigneter Blends mit ABS oder geeigneten Kautschuken; Sportartikel, wie z.B. Slalomstangen oder Skischuhschnallen; Haushaltsartikel, wie z.B. Küchenspülen und Brieflcastengehäuse; Gehäuse, wie z. B. Elektroverteilerschränke; Gehäuse für Elektrozahnbürsten und Föngehäuse; transparente Waschmaschinen ― Bullaugen mit verbesserter Beständigkeit gegenüber der Waschlösung; Schutzbrillen, optische Korrekturbrillen; Lampenabdeckungen für Kücheneinrichtungen mit verbesserter Beständigkeit gegenüber Küchendunst insbesondere Öldämpfen; Verpackungsfolien für Arzneimittel; Chip-Boxen und Chip-Träger oder für die Herstellung von sonstigen Anwendungen, wie z.B. Stallmasttüren oder Tierkäfige verwendet werden.

Die Formkörper und Extrudate erhältlich aus den erfindungsgemäßen Polymeren sind ebenfalls Gegenstand dieser Anmeldung.

Die nachfolgenden Beispiele sollen die Erfindung illustrieren ohne sie jedoch einzuschränken.

### Beispiele

Die relative Lösungsviskosität wird bestimmt an 0,5 g Polymer in 100 ml Methylenchlorid bei 20°C.
Melt Volume Rate (MVR) wird bestimmt nach ISO 1133.
I Melt Volume Rate (IMVR) wird bestimmt nach ISO 1133
wobei jedoch die Probe vor der Messung 20 min bei der Messtemperatur (in der vorliegenden Anmeldung 300°C) getempert wird.
Die VICAT-Temperatur wird bestimmt nach ISO 306

Die Kerbschlagzähigkeit wird bestimmt nach ISO 180/4A bei Raumtemperatur.
Streckspannung, Streckdehnung und E-Modul werden bestimmt nach ISO 527.
Reißfestigkeit und Reißdehnung werden bestimmt nach ISO 527

### Beispiel 1

Synthese von 2,4-Bis[1-(4-hydroxyphenyl)-1-methylethyl]phenol ("Trisphenol"): 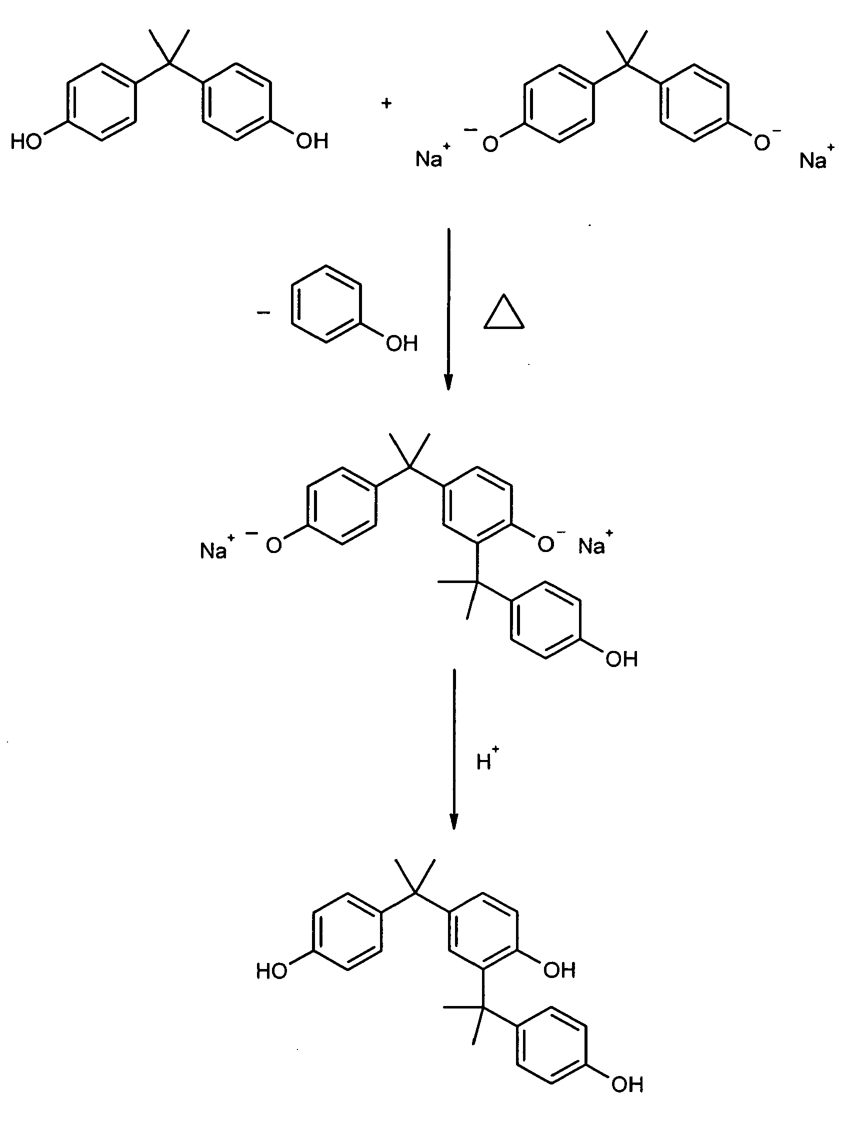 1712 g (5,00 mol) Bisphenol A (BPA, Bayer AG) werden in einer Stickstoffatmosphäre bei 190°C aufgeschmolzen. Anschließend werden 20,4 g (0,05 mol) festes Natrium-Bisphenolat (Na₂BPA) hinzugegeben. Aus der resultierenden Schmelze wird das gebildete Phenol bei 180 - 190°C Sumpftemperatur im Wasserstrahlvakuum (15-20 mbar) abdestilliert. Der Ansatz wird fünfmal wiederholt und das vom Phenol befreite Rohmaterial (nach Abtrennung von insgesamt 353 g; 3,75 mol Phenol) zusammengegeben.

Das Rohmaterial wird in drei Portionen aus je 3850 ml Toluol mit 75 ml Essigsäure (konz.) umkristallisiert. Man erhält ca. 7 kg (feucht) Kristallisat mit einem Trisphenolanteil von ca. 45 %.

Dieses Material wird in Portionen zu 1 kg mit je 31 Toluol bei 100°C extrahiert. Zur Extraktion wird die Toluolsuspension bei 100°C ca. 15 min. gerührt und anschließend heiß filtriert. Die Extraktionsrückstände ergeben zusammen 1540 g (feucht) mit einem Trisphenolanteil von ca. 85 %. Die gesamte Menge wird erneut zweimal mit 4 l Toluol bei 100°C extrahiert und der Extraktionsrückstand bei 80°C im Vakuum getrocknet. Man erhält 995,5 g mit einem Gehalt von 94,2 % Trisphenol. Zur weiteren Anreicherung des Trisphenols wird nochmals mit 3 l Toluol bei 80°C extrahiert. Nach Trocknung bei 80°C im Vakuum erhält man 945 g eines beigen Pulvers mit einem Gehalt an Trisphenol von 97,9 %, was einer Gesamtausbeute von 11,6 % entspricht. Der Rest besteht aus Bisphenol A.

Ausbeute: 945 g (11,6 % der Theorie) eines weiß-beigen Pulvers.

Analytik:
- GC-MS nach Derivatisierung als Trimetylsilylderivat: Es wird hierbei die erwartete Masse 362 als Produktpeak gefunden. Reinheit: 97,94 % (1,79 % BPA als Verunreinigung identifiziert).

### Beispiel 2

Zu einer mit Stickstoff inertisierten Lösung von 15,862 g (0,0694 mol) Bisphenol A und 6,13 g (0,153 mol) Natriumhydroxid in 118 ml Wasser werden 118 ml Methylenchlorid und 30 ml Chlorbenzol hinzugegeben. Bei einer einstufigen Fahrweise gibt man 0,081 g (0,00022 mol bzw. 0,32 mol-% bzgl. Bisphenol A) des Verzweigers aus Beispiel 1 und 0,3559 g (0,00237 mol bzw. 3,4 mol-% bzgl. Bisphenol A) p-tert.-Butylphenol (BUP) als Kettenabbrecher hinzu. Bei einem pH-Wert von 13,4 und 20°C gibt man im Verlauf von 1 Stunde 9,6 ml (0,1394 mol) Phosgen hinzu. Um den pH-Wert nicht unter 12,6 fallen zu lassen, wird während der Phosgenierung 25 %-ige Natronlauge zugegeben. Nach beendeter Phosgenierung und Spülung mit Stickstoff gibt man 96,7 µl (0,0007 mol, 1 mol-% bzgl. Bisphenol A) N-Ethylpiperidin als Katalysator zu und lässt 1 Stunde nachrühren. Die organische Phase wird nach Abtrennen der wässrigen Phase mit Phosphorsäure angesäuert und mit destilliertem Wasser neutral und salzfrei gewaschen. Nach dem Ausfällen in Methanol und Trocknen im Vakuumtrockenschrank bei 80°C erhält man 16,8 g Polycarbonat.

Analytik:
- relative Lösungsviskosität in Methylenchlorid (0,5 g/100 ml Lösung): 1,310 / 1,315
- GPC (Kalibrierung gegen BPA-Polycarbonat): Molekulargewicht Mw=31789, Mn=14010, Uneinheitlichkeit D=2,27

### Beispiel 3

Zu einer mit Stickstoff inertisierten Lösung von 4096,3 g (17,94 mol) Bisphenol A und 1584 g (39,6 mol) Natriumhydroxid in 28,4 l Wasser werden 28,4 l Methylenchlorid und 9 l Chlorbenzol hinzugegeben. Bei einer einstufigen Fahrweise gibt man 20,88 g (0,0576 mol bzw. 0,32 mol-% bzgl. Bisphenol A) des Verzweigers aus Beispiel 1 und 91,92 g (0,612 mol bzw. 3,4 mol% bzgl. Bisphenol A) p-tert.-Butylphenol (BUP) als Kettenabbrecher hinzu. Bei einem pH-Wert von 13,4 und 21°C gibt man im Verlauf von 1 Stunde und 20 Minuten 3560 g (36 mol) Phosgen hinzu. Um den pH-Wert nicht unter 12,6 fallen zu lassen, wurde während der Phosgenierung 25 %-ige Natronlauge zugegeben. Nach beendeter Phosgenierung und Spülung mit Stickstoff gibt man 24,7 ml (0,18 mol, 1 mol-% bzgl. Bisphenol A) N-Ethylpiperidin als Katalysator zu und lässt 1 Stunde nachrühren. Die organische Phase wird nach Abtrennen der wässrigen Phase mit Phosphorsäure angesäuert und mit destilliertem Wasser neutral und salzfrei gewaschen. Nach Lösungsmittelaustausch gegen Chlorbenzol wird das Produkt über einen Ausdampfextruder extrudiert.

Man erhält 3460 g Polycarbonat (nach Verwerfen des Vorlaufs).

### Analytik:

- relative Lösungsviskosität in Methylenchlorid (0,5 g/100 ml Lösung): 1,34
- MVR 300 °C/1,2 kg: 1,7 ml/10 min
- IMVR 300 °C/1,2 kg 20 min: 1,7 ml/10 min
- Vicat VSTB 50: 153,2 °C

### Beispiel 4

Zu einer mit Stickstoff inertisierten Lösung von 4096,3 g (17,94 mol) Bisphenol A und 1584 g (39,6 mol) Natriumhydroxid in 28,4 l Wasser werden 28,4 l Methylenchlorid und 9 l Chlorbenzol hinzugegeben. Bei einer einstufigen Fahrweise gibt man 19,57 g (0,054 mol bzw. 0,30 mol% bzgl. Bisphenol A) des Verzweigers aus Beispiel 1 und 57,6 g (0,612 mol bzw. 3,4 mol-% bzgl. Bisphenol A) Phenol als Kettenabbrecher hinzu. Bei einem pH-Wert von 13,4 und 21°C gibt man im Verlauf von 1 Stunde und 20 Minuten 3560 g (36 mol) Phosgen hinzu. Um den pH-Wert nicht unter 12,6 fallen zu lassen, wird während der Phosgenierung 25 %-ige Natronlauge zugegeben. Nach beendeter Phosgenierung und Spülung mit Stickstoff gibt man 24,7 ml (0,18 mol, 1 mol-% bzgl. Bisphenol A) N-Ethylpiperidin als Katalysator zu und lässt 1 Stunde nachrühren. Die organische Phase wird nach Abtrennen der wässrigen Phase mit Phosphorsäure angesäuert und mit destilliertem Wasser neutral und salzfrei gewaschen. Nach Lösungsmittelaustausch gegen Chlorbenzol wird das Produkt über einen Ausdampfextruder extrudiert.

Man erhält 3732 g Polycarbonat (nach Verwerfen des Vorlaufs).

### Analytik:

- relative Lösungsviskosität in Methylenchlorid (0,5 g/100 ml Lösung): 1,340
- MVR 300 °C/1,2 kg: 2,4 ml/10 min
- IMVR 300 °C/1,2 kg 20 min: 2,2 ml/10 min
- Vicat VSTB 50: 149,6°C

### Beispiel 5

Zu einer mit Stickstoff inertisierten Lösung von 4096,3 g (17,94 mol) Bisphenol A und 1584 g (39,6 mol) Natriumhydroxid in 28,4 1 Wasser werden 28,4 1 Methylenchlorid und 9 1 Chlorbenzol hinzugegeben. Bei einer einstufigen Fahrweise gibt man 19,57 g (0,054 mol bzw. 0,30 mol-% bzgl. Bisphenol A) des Verzweigers aus Beispiel 1 und 66,06 g (0,702 mol bzw. 3,9 mol-% bzgl. Bisphenol A) Phenol als Kettenabbrecher hinzu. Bei einem pH-Wert von 13,4 und 21°C gibt man im Verlauf von 1 Stunde und 20 Minuten 3560 g (36 mol) Phosgen hinzu. Um den pH-Wert nicht unter 12,6 fallen zu lassen, wird während der Phosgenierung 25 %-ige Natronlauge zugegeben. Nach beendeter Phosgenierung und Spülung mit Stickstoff gibt man 24,7 ml (0,18 mol, 1 mol-% bzgl. Bisphenol A) N-Ethylpiperidin als Katalysator zu und lässt 1 Stunde nachrühren. Die organische Phase wird nach Abtrennen der wässrigen Phase mit Phosphorsäure angesäuert und mit destilliertem Wasser neutral und salzfrei gewaschen. Nach Lösungsmittelaustausch gegen Chlorbenzol wird das Produkt über einen Ausdampfextruder extrudiert.

Man erhält 3775 g Polycarbonat (nach Verwerfen des Vorlaufs).

### Analytik:

- relative Lösungsviskosität in Methylenchlorid (0,5 g/100 ml Lösung): 1,303
- MVR 300 °C/1,2 kg : 4,2 ml/10 min
- IMVR 300 °C/1,2 kg 20 min: 4,3 ml/10 min
- Vicat VSTB 50: 147,5°C

Der Schmelzindex MVR gibt an, wie viel Gramm des aufgeheizten thermoplastischen Produktes in 10 Minuten unter der Wirkung einer festgelegten Kraft durch eine genormte Düse bei einer bestimmten Temperatur extrudiert wird. In den vorliegenden Fällen beträgt die Kraft 1,2 kg und die Temperatur 300 °C. Beim IMVR wird die Probe vor der Extrusion 20 Minuten lang bei 300 °C im Gerät gehalten. Tritt in dieser Zeit eine Zersetzung des Polymers auf, erhält man abhängig vom Grad der Zersetzung größere Werte als beim MVR. Das Produkt ist nach der Belastung also dünnflüssiger und es kann mehr Material durch die Düse strömen. Sind MVR und IMVR praktisch im Rahmen der Messgenauigkeit/Fehlergrenze identisch, so ist das ein Beweis für die thermische Stabilität des Materials (vgl. Beispiele 3 bis 5).

### Beispiel 6

Zu einer mit Stickstoff inertisierten Lösung von 4566 g (20 mol) Bisphenol A und 1760 g (44 mol) Natriumhydroxid in 36,5 1 Wasser werden 24,1 1 Methylenchlorid und 12,4 1 Chlorbenzol hinzugegeben. Bei einer einstufigen Fahrweise gibt man 21,75 g (0,06 mol bzw. 0,30 mol-% bzgl. Bisphenol A) des Verzweigers aus Beispiel 1 und 67,76 g (0,72 mol bzw. 3,6 mol-% bzgl. Bisphenol A) Phenol als Kettenabbrecher hinzu. Bei einem pH-Wert von 13,4 und 21°C gibt man im Verlauf von 1 Stunde und 20 Minuten 3956 g (40 mol) Phosgen hinzu. Um den pH-Wert nicht unter 12,6 fallen zu lassen, wird während der Phosgenierung 30%-ige Natronlauge zugegeben. Nach beendeter Phosgenierung und Spülung mit Stickstoff gibt man 24,7 ml (0,18 mol, 1 mol-% bzgl. Bisphenol A) N-Ethylpiperidin als Katalysator zu und lässt 1 Stunde nachrühren. Die organische Phase wird nach Abtrennen der wässrigen Phase mit Phosphorsäure angesäuert und mit destilliertem Wasser neutral und salzfrei gewaschen. Nach Lösungsmittelaustausch gegen Chlorbenzol wird das Produkt über einen Ausdampfextruder extrudiert.

Man erhält 4020 g Polycarbonat (nach Verwerfen des Vorlaufs).

### Analytik:

- relative Lösungsviskosität in Methylenchlorid (0,5 g/100 ml Lösung): 1,320
- GPC (Kalibrierung gegen BPA-Polycarbonat): Molekulargewicht Mw=34441, Mn=11334, Uneinheitlichkeit D=3,04

### Physikalische Eigenschaften der erfindungsgemäßen Polycarbonate:

| Mechanische Eigenschaften des verzweigten Polycarbonates aus Beispiel 3: | |
|---|---|
| Kerbschlagzähigkeit ISO 180/4A RT [kJ/m²]: | 10x82z |
| Streckspannung ISO 527: | 63 N/mm² |
| Streckdehnung ISO 527: | 6,5 % |
| Reißfestigkeit (ISO 527): | 61 N/mm² |
| Reißdehnung (ISO 527): | 90 % |
| E-Modul (ISO 527) | 2201 N/mm² |

### Vergleichsbeispiel 1

Verzweigtes Polycarbonat mit Bisphenol A als Diphenol und Isatinbiskresol als Verzweiger (0,3%) sowie Phenol als Kettenabbrecher und einem MVR von 3..

| Eigenschaften | Vergleichsbeispiel 1 |
|---|---|
| Kerbschlagzähigkeit ISO 180/4A RT [kJ/m²]: | 10x80z |
| Streckspannung: | 65 N/mm² |
| Streckdehnung: | 6,5 % |
| Reißfestigkeit: | 62 N/mm² |
| Reißdehnung: | 85 % |
| E-Modul: | 2304 N/mm² |

### Eigenschaften des verzweigten Polycarbonates aus Beispiel 4:

| | |
|---|---|
| Kerbschlagzähigkeit ISO 180/4A RT [kJ/m²]: | 10x80z |
| Streckspannung: | 65 N/mm² |
| Streckdehnung: | 6,4 % |
| Reißfestigkeit: | 64 N/mm² |
| Reißdehnung: | 96 % |
| E-Modul: | 2316 N/mm² |

Eigenschaften des verzweigten Polycarbonates aus Beispiel 5:

| | |
|---|---|
| Kerbschlagzähigkeit ISO 180/4A RT [kJ/m²]: | 10x79z |
| Streckspannung: | 64 N/mm² |
| Streckdehnung: | 6,4 % |
| Reißfestigkeit: | 64 N/mm² |
| Reißdehnung: | 109 % |
| E-Modul: | 2295 N/mm² |

Der Vergleich der erfindungsgemäßen Beispiele 1, 4 und 5 mit dem Vergleichsbeispiel 1 zeigt eine verbesserte Reißdehnung bei ansonsten vergleichbaren anderen mechanischen Eigenschaften.

### Beispiel 7

Anhand verschiedener verzweigter Polycarbonate analog der vorherigen Beispiele 3-5 lässt sich die thermische Stabilität der Produkte nachweisen.

### Polymer gemäß Beispiel 3:

MVR 300°C/1,2 kg : 1,7 ml/10 min IMVR 300°C/1,2 kg 20 min : 1,7 ml/10 min

### Polymer gemäß Beispiel 4:

MVR 300°C/1,2 kg : 2,4 ml/10 min IMVR 300°C/1,2 kg 20 min : 2,2 ml/10 min

### Polymer gemäß Beispiel 5:

MVR 300°C/1,2 kg : 4,2 ml/10 min IMVR 300°C/1,2 kg 20 min : 4,3 ml/10 min

Die Ergebnisse zu den MVR und IMVR-Messungen zeigen, dass die verzweigten Strukturelemente thermisch stabil sind.

Die Ermittlung der Viskosität als Funktion der Schergeschwindigkeit (ISO 11443) erlaubt ebenfalls eine Aussage zur thermischen Stabilität:

Die im Folgenden bestimmte Strukturviskosität belegt zusätzlich, dass die Verzweigerstellen auch nach thermischer Belastung intakt sind und vermeintliche Verunreinigungen im eingesetzten Verzweiger nicht schädlich sind. Ein Abbau der verzweigenden Struktureinheit tritt also nicht auf.

Das in Beispiel 3 erhaltene verzweigte Polycarbonat wird bei 260, 280 und 300°C rheologisch untersucht. Dabei werden folgende Daten erhalten:

| Schergefälle [s⁻¹] | Viskosität [Pas] / 260 °C | / 280 °C | / 300 °C |
|---|---|---|---|
| 50 | 3537 | 1857 | 1034 |
| 100 | 2754 | 1518 | 882 |
| 200 | 2123 | 1220 | 724 |
| 500 | 1323 | 838 | 536 |
| 1000 | 884 | 582 | 394 |
| 1500 | 675 | 454 | 325 |
| 5000 | - | 198 | 154 |

Dabei handelt es sich um typische Werte für strukturviskose, verzweigte Materialien.

## Patentansprüche

1. Verfahren zur Herstellung von Polycarbonat nach dem Phasengrenzflächen oder Schmelzeumesterungsverfahren, **dadurch gekennzeichnet, dass** als Verzweiger Verbindungen der Formeln (1) 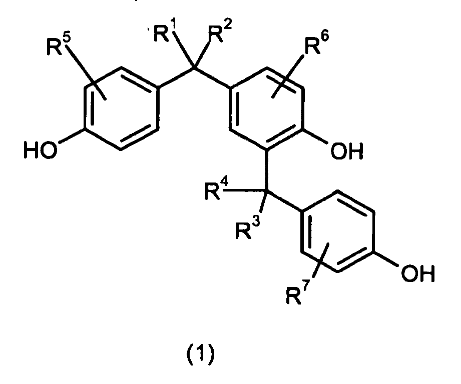 in welcher R¹, R², R³ und R⁴ unabhängig voneinander für C₁-C₁₀ Alkyl stehen, R⁵, R⁶ und R⁷ unabhängig voneinander für Wasserstoff oder C₁-C₁₀ Alkyl stehen, oder R¹ und R² sowie R³ und R⁴ mit dem Kohlenstoffatom, an das sie gebunden sind, einen C₅-C₁₀ Cycloalkyl-Rest bilden, wobei der Cycloalkyl-Rest substituiert sein kann,
die als Rohprodukt bei deren Herstellung anfallen und ohne weitere Reinigung eingesetzt werden oder die unmittelbar aus der Umkristallisation oder der Schmelzekristallisation anfallen, eingesetzt werden.

2. Verfahren gemäß Anspruch 1, wobei die Verbindungen der Formel (1) technisch aus der Destillation von Bisphenol A-Strömen bei der Bisphenol A-Herstellung anfallen.

3. Verwendung von Verbindungen der Formel (1) gemäß Anspruch 1 im Gemisch mit Bisphenolen wie es aus der Synthese der Verbindung der Formel (1) anfällt, als Verzweiger bei der Herstellung von Polycarbonaten und Copolycarbonaten.

## Claims

1. Process for the production of polycarbonate by the phase boundary or melt transesterification process, **characterised in that** as branching agents there are used compounds of the Formulae (1) 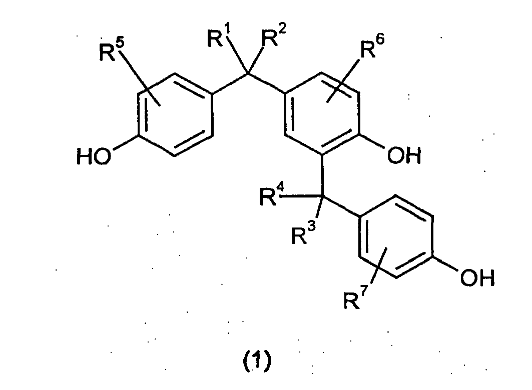 in which R¹, R², R³ and R⁴ independently of one another denote C₁-C₁₀ alkyl, R⁵, R⁶ and R⁷ independently of one another denote hydrogen or C₁-C₁₀ alkyl, or R¹ and R² and also R³ and R⁴ together with the carbon atom to which they are bonded form a C₅-C₁₀ cycloalkyl radical, wherein the cycloalkyl radical can be substituted,
which occur as crude product in the production and are used without further purification, or occur directly in the recrystallisation or melt crystallisation.

2. Process according to claim 1, wherein the compounds of the Formula (1) occur technically in the distillation of bisphenol A streams in the production of bisphenol A.

3. Use of compounds of the Formula (1) according to claim 1 mixed with bisphenols such as occur in the synthesis of the compound of the Formula (1), as branching agents in the production of polycarbonates and co-polycarbonates.

## Revendications

1. Procédé de préparation de polycarbonates selon le procédé interfacial ou le procédé de transestérification dans la masse fondue, **caractérisé en ce que** sont mis en oeuvre comme agents de ramification, des composés de la formule (1) 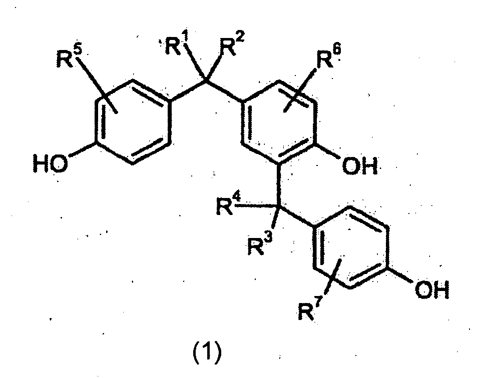 dans laquelle R¹, R², R³ et R⁴ représentent indépendamment les uns des autres un alkyle en C₁-C₁₀, R⁵, R⁶ et R⁷ correspondent indépendamment les uns des autres à l'hydrogène ou à un alkyle en C₁-C₁₀, et R¹ et R² ainsi que R³ et R⁴ forment avec l'atome de carbone auquel ils sont fixés un radical cycloalkyle en C₅-C₁₀, lequel peut être substitué,
qui se présentent comme produit brut lors de leur préparation et sont utilisés sans purification ultérieure ou qui résultent directement de la recristallisation ou de la cristallisation de la masse fondue.

2. Procédé selon la revendication 1, dans lequel les composés de la formule (1) résultent techniquement de la distillation des flux de bisphénol A lors de la préparation du bisphénol A.

3. Utilisation des composés de la formule (1) selon la revendication 1 dans le mélange avec les bisphénols tel qu'il résulte de la synthèse du composé de la formule (1), comme agents de ramification lors de la préparation de polycarbonates et de copolycarbonates.
